## Europäisches Patentamt

## European Patent Office

## Office européen des brevets

(11) Veröffentlichungsnummer: **0 075 094**
**A1**

# EUROPÄISCHE PATENTANMELDUNG

(21) Anmeldenummer: **82107109.9**

(22) Anmeldetag: **06.08.82**

(51) Int. Cl.³: **C 09 D 5/02, C 09 D 7/14**

(30) Priorität: **25.08.81 CH 5476/81**

(43) Veröffentlichungstag der Anmeldung: **30.03.83**
**Patentblatt 83/13**

(84) Benannte Vertragsstaaten: **BE CH DE FR GB LI LU NL**

(71) Anmelder: **AEROSOL-SERVICE AG, Postfach Steinligasse 21, CH-4313 Möhlin (CH)**

(72) Erfinder: **Schneider, Rolf, Dr., Rheinlehne 4, CH-4133 Pratteln (CH)**

(74) Vertreter: **Blum, Rudolf Emil Ernst et al, c/o E. BLUM & CO. Vorderberg 11, CH-8044 Zürich (CH)**

(54) **Verfahren zur Herstellung von wässrigen Sprayfarben.**

(57) Wäßrige Sprayfarben, welche in einem Druckgasbehälter enthalten sind und mittels einem Treibmittel versprüht werden, werden erhalten, indem man eine Mischung, welche

a) wenigstens ein Bindemittel, das mindestens eine Carboxylgruppe enthält und in einem oder mehreren Lösungsmitteln gelöst ist,

b) wenigstens eine flüchtige basische Verbindung, und

c) Wasser enthält, herstellt, diese Mischung in einen Druckgasbehälter abfüllt, diesen mit einem Ventil verschliesst und anschließend mit irgendeinem Treibmittel versetzt.

Die erfindungsgemäß herstellbaren wäßrigen Klarlacke und Sprayfarben können in der gleichen Art und Weise verwendet werden, wie die bisher entsprechend hergestellten Produkte auf der Basis von organischen Lösungsmitteln. Von der Vielzahl der Verwendungsmöglichkeiten sei beispielsweise der «Do it yourself»-Sektor und der Fahrzeugreparatursektor erwähnt.

EP 0 075 094 A1

- 1 -

Verfahren zur Herstellung von wässrigen Sprayfarben
-----------------------------------------------------------------

Die vorliegende Erfindung betrifft ein Verfahren zur Herstellung von wässrigen Sprayfarben.

Die bisher auf dem Markt befindlichen Sprühfarben sind auf der Basis von in organischen Lösungsmitteln löslichen Bindemitteln hergestellt. Als Treibmittel solcher Sprühlacke wurde zuerst meist Dichlordifluormethan (F 12) und Trichlormonofluormethan (F 11) eingesetzt. Später kam es zum Ersatz von F 11 und F 12 durch Propan-Butan. Der Einsatz von Propan-Butan bedingt die Verwendung von halogenierten Lösungsmitteln, wie Methylenchlorid, 1,1,1-Trichlorethan, Perchlorethylen etc., um die Brennbarkeit solcher Sprays herabzusetzen.

Sowohl bei mit F 11 und F 12 hergestellten Farbsprays, als auch bei solchen, die mit Propan-Butan abgefüllt werden, kommen organische Lösungsmittel zur Verwendung, die beim Versprühen in die Atmosphäre gelangen.

Im Bestreben, diese für die Umwelt nicht immer unbedenklichen Lösungsmittel in Farbsprays erheblich zu reduzieren, wurde ein System gefunden, das durch Verwendung eines wasserlöslichen Bindemittels eine wesentliche Herabsetzung des organischen Lösungsmittelanteiles gestattet. Zu diesem Zweck ist es nötig, ein in Wasser, vorzugsweise in Wasser, das eine flüchtige Base gelöst enthält, lösliches Bindemittel zu verwenden, welches in Lösung stabil bleibt

Dr. MZ/lb
19.7.1982

EU 1121

- 2 -    0075094

und unter irgendeiner Atmosphäre, vorzugsweise an der Luft, bei irgend einem Druck, vorzugsweise bei umgebendem Luftdruck, rasch trocknet, vorzugsweise in der Grössenorndung von wenigen Minuten bis mehreren Stunden, wobei der Bereich von etwa 30 Minuten stark bevorzugt wird. Das Bindemittel muss nach dem Trocknen in Wasser unlöslich werden und beispielsweise den qualitativen Anforderungen einer Farbe voll genügen.

Das erfindungsgemässe Verfahren zur Herstellung von wässrigen Sprayfarben, welche in einem Druckgasbehälter enthalten sind und mittels einem Treibmittel versprüht werden, ist dadurch gekennzeichnet, dass man eine Mischung, welche

a) wenigstens ein Bindemittel, das mindestens eine Carboxylgruppe enthält und in einem oder mehreren Lösungsmitteln gelöst ist,

b) wenigstens eine flüchtige basische Verbindung, und

c) Wasser

enthält, herstellt, diese Mischung in einen Druckgasbehälter abfüllt, diesen mit einem Ventil verschliesst und anschliessend mit irgendeinem Treibmittel versetzt.

Vorzugsweise enthält die Mischung 20 bis 30 Gew.-% Bindemittel, 1,5 bis 2,0 Gew.-% basische Verbindung und, in Ergänzung auf 100 Gew.-% der fertigen Mischung, Wasser.

Die oben genannte Mischung kann zusätzlich noch

wenigstens ein Netzmittel und/oder

wenigstens ein Schwebemittel, vorzugsweise ausgewählt aus der Gruppe, bestehend aus Kieselgelen und/oder Bentoniten, und/oder

wenigstens ein Verlaufmittel, vorzugsweise ausgewählt aus den modifizierten Silikonen, und/oder

wenigstens einen Entschäumer, vorzugsweise ausgewählt aus der Gruppe, bestehend aus Tributylphosphaten und Silikon-haltigen Verbindungen, und/oder

wenigstens ein Sikkativ und/oder

wenigstens einen Lösungsvermittler, vorzugsweise ausgewählt aus der Gruppe, bestehend aus Alkoholen, insbesondere ein $C_1$-$C_5$-Alkohol, Glycolethern und Diglycolethern, wobei insbesondere solche Glycolether und Diglycolether bevorzugt sind, die mit einem $C_1$-$C_3$-Alkohol verethert worden sind, und oder

wenigstens ein Pigment (ausgenommen Klarlack) enthält.

Speziell bevorzugt ist die Mischung, die 0,1 bis 0,3 Gew.-% Netzmittel und/oder 0,1 bis 0,3 Gew.-% Schwebemittel und /oder 0,2 bis 0,5 Gew.-% Verlaufmittel und/oder 0,2 bis 0,5 Gew.-% Entschäumer und/oder 0,5 bis 0,8 Gew.-% Sikkativ und/oder 1 bis 3 Gew.-% Lösungsvermittler und/oder 10 bis 15 Gew.-% Pigment enthält, wobei sich die Mengenangaben jeweils auf das Gewicht der fertigen Mischung beziehen.

Als Untergründe für die erfindungsgemäss herstellbaren Klarlacke und/oder Sprayfarben eignen sich zum Beispiel die verschiedensten Hölzer, Produkte auf der Basis von Holz sowie Metalle.

Beim erfindungsgemässen Verfahren kommen als Treibmittel beispielsweise in Frage: Dimethylether, F 12, Propan-Butan, Stickstoff und Lachgas.

Neben dem speziell zusammengesetzten Lack, welcher vorzugsweise pigmentiert ist, muss zweckmässig ein geeignetes Ventil und ein geeigneter Druckgasbehälter verwendet werden, um zu befriedigenden Resultaten, zum Beispiel rasches Trocknen an der Luft, guter Verlauf der versprühten Farbe, gute Haftungseigenschaften, zu gelangen. Diese Ventile und Druckgasbehälter sind im Stand der Technik bekannt.

Vorzugsweise ist das (die) Bindemittel ausgewählt aus der Gruppe, bestehend aus

a) wasserlöslichen Copolymeren der Typen

der gegebenenfalls substituierten Styrolmaleinsäuren,

der gegebenenfalls substituierten Styrolacrylamide,

der gegebenenfalls substituierten Styrolmethacrylamide und

der Polyvinylpyrrolidonmethylvinylether-Copolymeren;

b) Acrylharzpolymeren, die freie Carboxylgruppen enthalten, vorzugsweise Polyacrylsäuren, oder Polyvinylalkoholpolymeren;

c) ungesättigten Oelen, vorzugsweise Leinöl, Holzöl und Soyaöl, welche durch eine Diensynthese mit Dicarbonsäuren, vorzugsweise Maleinsäure und/oder Fumarsäure und/oder Itaconsäure, mit Carboxylgruppen versehen worden sind;

d) Alkydharzen, erhalten aus Polyolen und ungesättigten Fettsäuren, die durch Umsetzung mit einer Carbonsäure, vorzugsweise Dimethylpropionsäure, mit einem Carbonsäureanhydrid oder einem Carbonsäuredianhydrid oder einem Carbonsäuretrianhydrid mit Carboxylgruppen versehen worden sind;

e) Carboxylgruppen enthaltende copolymerisierte Epoxidester, vorzugsweise Epoxidesterharze, welche mit ungesättigten Fettsäuren, vorzugsweise mit Dienolfettsäuren kondensiert worden sind; und

f) Polyurethanen, die durch Reaktion von Isocyanaten mit Fettsäuren erhalten worden sind.

Als Beispiel eines Bindemittels sei Beckosol 92-100 genannt, welches ein Polykondensationsharz ist.

Im erfindungsgemässen Verfahren kann sowohl ein einziges Bindemittel als auch ein Gemisch von Bindemitteln eingesetzt werden.

Durch die Einführung von Carboxylgruppen werden im allgemeinen die genannten Bindemittel wasserlöslich, vorzugsweise in alkalischem Wasser.

Als Neutralisierungsmittel für die genannten Carboxylgruppen eignet sich irgend eine flüchtige basische Verbindung, wobei auch Gemische solcher Basen verwendet werden können.

Vorzugsweise ist die basische Verbindung ausgewählt aus der Gruppe bestehend aus flüchtigen anorganischen Basen, vorzugsweise Ammoniak, und organischen Basen, vorzugsweise ausgewählt aus der Gruppe, bestehend aus Monoalkylaminen, insbesondere Pentylamin und Hexylamin, Alkoxyaminen, insbesondere Ethoxyethylamin, Methoxypropylamin, 3-Tridecyloxypropylamin und 1-Methoxymethylpropylamin, sekundären Aminen, insbesondere Dipropylamin, Dibutylamin, Ethylbutylamin und n-Propyl-sek.-butylamin, Trialkylaminen, insbesondere Triethylamin, Tri-2-ethylhexylamin, Tripropylamin und Triisopropylamin, Alkanolaminen, insbesondere Ethanolamin, Triethanolamin, N,N-Dimethylethanol, 2-Amino-2-methyl-1-propanol, 2-Amino-2-methyl-1,3-propandiol, Trishydroxymethylaminomethan, und cyclischen Aminen, insbesondere Morpholine.

Durch die Wahl eines geeigneten Neutralisationsmittels kann die Trocknungszeit der Sprayfarben bestimmt werden.

Im erfindungsgemässen Verfahren kann einfach oder mehrfach destilliertes Wasser, Ionentauscherwasser, Leitungswasser wie auch Brauchwasser eingesetzt werden, wobei deionisiertes Wasser bevorzugt ist.

Wie weiter oben angegeben, können im erfindungsgemässen Verfahren zusätzlich noch Netzmittel, Schwebemittel, auch Antiabsetzmittel genannt, Verlaufmittel, auch Oberflächenentspannungsmittel genannt, Entschäumer, auch Antischaummittel genannt, Sikkative, Lösungsvermittler, wie beispielsweise Alkohole, Glycolether und Diglycolether, und Pigmente eingesetzt werden, wobei sowohl eine einzelne der genannten Verbindungen als auch Gemische der genannten Verbindungen verwendet werden können. Gegebenenfalls können im erfindungsgemässen Verfahren ebenfalls weitere Zusatzstoffe und/oder Hilfsstoffe, wie z.B. Antioxidatien, Stabilisatoren, etc., mitverwendet werden.

Als Beispiel für ein Netzmittel sei Soyalecithin genannt.

Als Sikkative können beispielsweise Cobalt- und Bleinaphthenate eingesetzt werden.

Als Pigmente können beispielsweise Titanoxyd, Eisenoxydrot, Hansagelb, Phthalocyaninblau etc. verwendet werden, wobei die entsprechende Auswahl nach dem jeweils gewünschten Farbton erfolgt.

Bei der Verwendung von Pigmenten in erfindungsgemässen Verfahren ist es bevorzugt, ein Schwebemittel mitzuverwenden, um das Sedimentieren schwerer Pigmente zu verhüten, wobei Bentonite und Kieselgele eine bevorzugte Stellung einnehmen. Vorzugsweise verwendet man Pigmente, welche mit Basen verträglich sind. Ausserordentlich wichtig können auch die Entschäumer, wie z.B. ein Tributylphosphat und die Silikon-haltigen Verbindungen, und die Verlaufmittel, wie beispielsweise die modifizierten Silikone, sein.

Ueblicherweise wird Byk 341 als Oberflächenentspannungsmittel bzw. Verlaufmittel verwendet.

Als Entschäumer können beispielsweise auch Polymekon 1446, bzw. Fettalkohole, höhere einwertige Alkohole, modifizierte und spezielle Silikone, ethoxylierte Verbindungen, wie z.B. Alkylphenolethylenoxydaddukte, Fettalkoholethylenoxydaddukte, Alkyl- und aromatische Sulfonate etc. verwendet werden.

Nach dem Versprühen einer erfindungsgemäss hergestellten Farbe trocknet diese gewöhnlich an der Luft, wobei durch Verdunsten des flüchtigen basischen Neutralisationsmittels und gegebenenfalls mit Hilfe der Sikkative ein wasserunlöslicher Lack entsteht.

Die erfindungsgemäss herstellbaren wässrigen Klarlacke und Sprayfarben können in der gleichen Art und Weise verwendet werden, wie die bisher entsprechend hergestellten Produkte auf der Basis von organischen Lösungsmitteln. Von der Vielzahl der Verwendungsmöglichkeiten sei beispielsweise der "Do it yourself"-Sektor und der Fahrzeugreparatursektor erwähnt.

Im Folgenden wird  das Beispiel  das Verfahren der vorliegenden Erfindung in weiteren Details illustrieren, aber den Umfang der Erfindung in keinem Fall einschränken.

### Beispiel

Man lege 300 g Beckosol 92-100, gelöst in 75 ml Butylglycol in einem 2-Liter-Gefäss vor, setzt dann 20 g Soyalecithin, anschliessend 10 g Kieselgur und 30 g Isopropanol zu. Anschliessend fügt man 150 g Titandioxyd oder ein anderes Pigment zu der Mischung. Im Falle eines Klarlackes wird auf die Verwendung eines Pigmentes verzichtet. Die Mischung wird homogenisiert und hernach noch 2 g Byk 341 zugesetzt und schlussendlich mit Wasser auf 1 kg verdünnt.

P a t e n t a n s p r ü c h e

1. Verfahren zur Herstellung von wässrigen Sprayfarben, welche in einem Druckgasbehälter enthalten sind und mittels einem Treibmittel versprüht werden, dadurch gekennzeichnet, dass man eine Mischung, welche

a) wenigstens ein Bindemittel, das mindestens eine Carboxylgruppe enthält und in einem oder mehreren Lösungsmitteln gelöst ist,

b) wenigstens eine flüchtige basische Verbindung, und

c) Wasser

enthält, herstellt, diese Mischung in einen Druckgasbehälter abfüllt, diesen mit einem Ventil verschliesst und anschliessend mit irgendeinem Treibmittel versetzt.

2. Verfahren nach Anspruch 1, dadurch gekennzeichnet, dass die Mischung 20 bis 30 Gew.-% Bindemittel, 1,5 bis 2,0 Gew.-% basische Verbindung und, in Ergänzung auf 100 Gew.-% der fertigen Mischung, Wasser enthält.

3. Verfahren nach einem der Ansprüche 1 bis 2, dadurch gekennzeichnet, dass die Mischung zusätzlich noch

wenigstens ein Netzmittel und/oder

wenigstens ein Schwebemittel, vorzugsweise ausgewählt aus der Gruppe, bestehend aus Kieselgelen und Bentoniten, und/oder

wenigstens ein Verlaufmittel, vorzugsweise ausgewählt aus den modifizierten Silikonen, und/oder

wenigstens einen Entschäumer, vorzugsweise ausgewählt aus der Gruppe, bestehend aus Tributylphosphaten und/oder Silikon-haltigen Verbindungen, und/oder

wenigstens ein Sikkativ und/oder

wenigstens einen Lösungsvermittler, vorzugsweise ausgewählt aus der Gruppe, bestehend aus Alkoholen, insbe-

sondere ein $C_1$-$C_5$-Alkohol, Glycolethern und Diglycolethern, wobei insbesondere solche Glycolether und Diglycolether bevorzugt sind, die mit einem $C_1$-$C_3$-Alkohol veräthert worden sind, und/oder

wenigstens ein Pigment (ausgenommen Klarlack) enthält.

4. Verfahren nach Anspruch 3, dadurch gekennzeichnet, dass die Mischung 0,1 bis 0,3 Gew.-% Netzmittel und/oder 0,1 bis 0,3 Gew.-% Schwebemittel und /oder 0,2 bis 0,5 Gew.-% Verlaufmittel und/oder 0,2 bis 0,5 Gew.-% Entschäumer und/oder 0,5 bis 0,8 Gew.-% Sikkativ und/oder 1 bis 3 Gew.-% Lösungsvermittler und/oder 10 bis 15 Gew.-% Pigment enthält, wobei sich die Mengenangaben jeweils auf das Gewicht der fertigen Mischung beziehen.

5. Verfahren nach einem der Ansprüche 1 bis 4, dadurch gekennzeichnet, dass das (die) Bindemittel ausgewählt ist (sind) aus der Gruppe, bestehend aus

a) wasserlöslichen Copolymeren der Typen
der gegebenenfalls substituierten Styrolmaleinsäuren,
der gegebenenfalls substituierten Styrolacrylamide,
der gegebenenfalls substituierten Styrolmethacrylamide und
der Polyvinylpyrrolidonmethylvinylether-Copolymeren;

b) Acrylharzpolymeren, die freie Carboxylgruppen enthalten, vorzugsweise Polyacrylsäuren, oder Polyvinylalkoholpolymeren;

c) ungesättigten Oelen, vorzugsweise Leinöl, Holzöl und Soyaöl, welche durch eine Diensynthese mit Dicarbonsäuren, vorzugsweise Maleinsäure und/oder Furmarsäure und/oder Itaconsäure, mit Carboxylgruppen versehen worden sind;

d) Alkydharzen, erhalten aus Polyolen und ungesättigten Fettsäuren, die durch Umsetzung mit einer Carbonsäure, vorzugsweise Dimethylpropionsäure, mit einem Carbonsäureanhydrid oder einem Carbonsäuredianhydrid oder einem Carbonsäuretrianhydrid mit Carboxylgruppen versehen worden sind;

e) Carboxylgruppen enthaltende copolymerisierte Epoxidester, vorzugsweise Epoxidesterharze, welche mit ungesättigten Fettsäuren, vorzugsweise mit Dienölfettsäuren kondensiert worden sind; und

f) Polyurethanen, die durch Reaktion von Isocyanaten mit Fettsäuren erhalten worden sind.

6. Verfahren nach einem der Ansprüche 1 bis 5, dadurch gekennzeichnet, dass die basische Verbindung ausgewählt ist aus der Gruppe, bestehend aus flüchtigen anorganischen Basen, vorzugsweise Ammoniak, und organischen Basen, vorzugsweise ausgewählt aus der Gruppe, bestehend aus Monoalkylaminen, insbesondere Pentylamin und Hexylamin, Alkoxyaminen, insbesondere Ethoxyethylamin, Methoxypropylamin, 3-Tridecyloxypropylamin und 1-Methoxymethylpropylamin, sekundären Aminen, insbesondere Dipropylamin, Dibutylamin, Ethylbutylamin und n-Propyl-sek.-butylamin, Trialkylaminen, insbesondere Triethylamin, Tri-2-ethylhexylamin, Tripropylamin und Triisopropylamin, Alkanolaminen, insbesondere Ethanolamin, Triethanolamin, N,N-Dimethylethanol, 2-Amino-2-methyl-1-propanol, 2-Amino-2-methyl-1,3-propandiol, Trishydroxymethylaminomethan, und cyclischen Aminen, insbesondere Morpholine.

7. Mischung zur Durchführung des Verfahrens gemäss einem der Ansprüche 1 bis 6, dadurch gekennzeichnet, dass sie

a) wenigstens ein Bindemittel, das mindestens eine Carboxylgruppe enthält und in einem oder mehreren Lösungsmitteln gelöst ist,

b) wenigstens eine flüchtige basische Verbindung und

c) Wasser

enthält.

8. Mischung nach Anspruch 7, dadurch gekennzeichnet, dass sie 20 bis 30 Gew.-% Bindemittel, 1,5 bis 2,0 Gew.-% basische Verbindung und, in Ergänzung auf 100 Gew.-% der fertigen Mischung, Wasser enthält.

9. Mischung nach einem der Ansprüche 7 bis 8, dadurch gekennzeichnet, dass sie zusätzlich noch

wenigstens ein Netzmittel und/oder

wenigstens ein Schwebemittel, vorzugsweise ausgewählt aus der Gruppe, bestehend aus Kieselgelen und/oder Bentoniten, und/oder

wenigstens ein Verlaufmittel, vorzugsweise ausgewählt aus den modifizierten Silikonen, und/oder

wenigstens einen Entschäumer, vorzugsweise ausgewählt aus der Gruppe, bestehend aus Tributylphosphaten und/oder Silikon-haltigen Verbindungen, und/oder

wenigstens ein Sikkativ und/oder

wenigstens einen Lösungsvermittler, vorzugsweise ausgewählt aus der Gruppe, bestehend aus Alkoholen, insbesondere ein $C_1$-$C_5$-Alkohol, Glycolethern und Diglycolethern, wobei insbesondere solche Glycolether und Diglycolether bevorzugt sind, die mit einem $C_1$-$C_3$-Alkohol verethert worden sind, und/oder

wenigstens ein Pigment (ausgenommen Klarlack) enthält.

10. Mischung nach Anspruch 9, dadurch gekennzeichnet, dass sie 0,1 bis 0,3 Gew.-% Netzmittel und/oder 0,1 bis 0,3 Gew.-% Schwebemittel und/oder 0,2 bis 0,5 Gew.-% Verlaufmittel und/oder 0,2 bis 0,5 Gew.-% Entschäumer und/oder 0,5 bis 0,8 Gew.-% Sikkativ und/oder 1 bis 3 Gew.-% Lösungsvermittler und/oder 10 bis 15 Gew.-% Pigment enthält, wobei sich die Mengenangaben jeweils auf das Gewicht der fertigen Mischung beziehen.

11. Mischung nach einem der Ansprüche 7 bis 10, dadurch gekennzeichnet, dass das (die) Bindemittel ausgewählt ist (sind) aus der Gruppe, bestehend aus

a) wasserlöslichen Copolymeren der Typen

der gegebenenfalls substituierten Styrolmaleinsäuren,

der gegebenenfalls substituierten Styrolacrylamide,

der gegebenenfalls substituierten Styrolmethacrylamide und

der Polyvinylpyrrolidonmethylvinylether-Copolymeren;

b) Acrylharzpolymeren, die freie Carboxylgruppen enthalten, vorzugsweise Polyacrylsäuren, oder Polyvinylalkoholpolymeren;

c) ungesättigten Oelen, vorzugsweise Leinöl, Holzöl und Soyaöl, welche durch eine Diensynthese mit Dicarbonsäuren, vorzugsweise Maleinsäure und/oder Furmarsäure und/oder Itaconsäure, mit Carboxylgruppen versehen worden sind;

d) Alkydharzen, erhalten aus Polyolen und ungesättigten Fettsäuren, die durch Umsetzung mit einer Carbonsäure, vorzugsweise Dimethylpropionsäure, mit einem Carbonsäureanhydrid oder einem Carbonsäuredianhydrid oder einem Carbonsäuretrianhydrid mit Carboxylgruppen versehen worden sind;

e) Carboxylgruppen enthaltende copolymerisierte Epoxidester, vorzugsweise Epoxidesterharze, welche mit ungesättigten Fettsäuren, vorzugsweise mit Dienolfettsäuren kondensiert worden sind; und

f) Polyurethanen, die durch Reaktion von Isocyanaten mit Fettsäuren erhalten worden sind.

12. Mischung nach einem der Ansprüche 7 bis 11, dadurch gekennzeichnet, dass die basische Verbindung ausgewählt ist aus der Gruppe, bestehend aus flüchtigen anorganischen Basen, vorzugsweise Ammoniak, und organischen Basen, vorzugsweise ausgewählt aus der Gruppe, bestehend aus Monoalkylaminen, insbesondere Pentylamin und Hexylamin, Alkoxyaminen, insbesondere Ethoxyethylamin, Methoxypropylamin, 3-Tridecyloxypropylamin und 1-Methoxymethylpropylamin, sekundären Aminen, insbesondere Dipropylamin, Dibutylamin, Ethylbutylamin und n-Propyl-sek.-butylamin, Trialkylaminen, insbesondere Triethylamin, Tri-2-ethyl-hexylamin, Tripropylamin und Triisopropylamin, Alkanol-aminen, insbesondere Ethanolamin, Triethanolamin, N,N-Dimethylethanol, 2-Amino-2-methyl-1-propanol, 2-Amino-2-methyl-1,3-propandiol, Trishydroxymethylaminomethan, und cyclischen Aminen, insbesondere Morpholine.

**Europäisches Patentamt**

# EUROPÄISCHER RECHERCHENBERICHT

0075094
Nummer der Anmeldung

EP 82 10 7109

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 837 412 (PACTRA IND.)  <br><br> * Ansprüche 1 bis 8; Seite 15, Abschnitt 1 * | 1,3,5, 6,7,9, 11,12 | C 09 D 5/02 <br> C 09 D 7/14 |
| X | US-A-4 265 797 (ALBERT SUK) <br> * Ansprüche 1 bis 5; Beispiele 1 und 2 * | 1-12 | |
| X | DE-A-2 360 174 (PPG INDUSTRIES) <br> * Ansprüche 1 bis 6 * | 1 | |

|  |  |  | RECHERCHIERTE SACHGEBIETE (Int. Cl. 3) |
|---|---|---|---|
|  |  |  | C 09 D 5 <br> C 09 D 7 |

Der vorliegende Recherchenbericht wurde für alle Patentansprüche erstellt.

| Recherchenort | Abschlußdatum der Recherche | Prüfer |
|---|---|---|
| DEN HAAG | 10-01-1983 | DE ROECK R.G. |